# EUROPEAN PATENT APPLICATION

(11) **EP 4 819 459 A1**
(43) Date of publication of application: **07.10.2026**
(21) Application number: 25168305.8
(22) Date of filing: 03.04.2025
(51) Int. Cl.: H02K 15/33, H02K 15/36

(54) **STATOR MASK FOR ELECTRON BEAM WELDING**

(71) Applicant: Ford Global Technologies, LLC, Dearborn, MI 48126 (US)
(72) Inventor: Kane, Paul Michael, Rayleigh, Essex, SS6 9TE (GB); Chantzis, Dimitrios, Basildon, Essex, SS14 2FQ (GB); Dunn, William Peter, Liverpool, Merseyside, L3 1AP (GB); Guest, Caroline, Brentwood, Essex, CM14 5ED (GB); Berger, Hendrik, 4730 Raeren (BE)
(74) Representative: Markowitz, Markus

(57) **Abstract**

The present disclosure provides a mask arrangement for electron beam welding of a motor stator, the mask arrangement including first and second mask elements each having holes formed therethrough which are shaped closely to receive an end part of a respective pair of clamped pins in an abutted configuration, and when the first mask element is rotated with respect to the second mask element, the first and second channel portions are substantially aligned so that the first and second channel portions substantially surround the respective pair of clamped pins such that an electron beam cannot pass the mask arrangement. Methods of electron beam welding of a motor stator are also provided.

## Description

The present disclosure relates to the manufacture of stators for electric motors, and more specifically to techniques for welding together ends of hairpins which form the stator of an electric motor. More specifically, the present disclosure relates to techniques for electron beam welding of a motor stator which protect the stator hairpins during welding.

Electron beam welding is a fusion welding process that uses a focused beam of high-velocity electrons to join materials. Electron beam welding may provide effective welds which have deep weld penetration, predictable weld outcomes, and narrow heat-affected zones. Electron beam welding is generally carried out in a vacuum environment. In the manufacturing of electric motor stators, electron beam welding may provide a robust and effective means of joining copper hairpin conductors.

Stators for electric motors generally contain numerous copper hairpin conductors that are inserted into slots in the stator core. These hairpins include free ends that protrude from one side of the stator and must be precisely welded together in pairs to form the stator winding circuits. Generally, the pins of each pair are clamped before being welded together along their abutting surfaces. Achieving consistent, high-quality welds is important for repeatability and robustness of motor stator construction.

Electron beam welding of stator hairpins may present technical challenges. The focused nature of the electron beam means that precise alignment of the hairpin ends is required to ensure proper fusion. Additionally, the high energy density of the electron beam can potentially have an effect on insulation of stator hairpins or other stator components if it is not directed appropriately. Stray electrons which deviate from the main beam path may cause unintended heating or material degradation in surrounding areas.

Furthermore, the vacuum environment typically used for electron beam welding may give rise to logistical complexities for high-volume manufacturing of stators. Maintaining consistent vacuum levels while allowing for rapid part handling and welding cycles can present manufacturing challenges. There are also challenges in positioning and fixing the stator assembly to enable access for welding each hairpin joint while protecting other areas.

The copper material of the hairpins is highly reflective and thermally conductive, which can affect beam absorption and heat distribution during welding. Achieving the proper weld pool geometry at the ends of the stator hairpins whilst reducing the likelihood outcomes such as porosity or incomplete fusion and ameliorating the effects of the electron beam on other parts of the motor stator requires careful control of welding parameters. The relatively small size of the hairpin conductors also makes the welding process sensitive to variations in fit-up and positioning.

In a first aspect, a mask arrangement for electron beam welding of a motor stator is provided. The mask arrangement includes a first mask element and a second mask element each comprising respective first and second concentric patterns of holes each shaped to accommodate a respective pair of clamped pins of a motor stator, the first and second mask elements configured to be rotatably moveable relative to each other. Each of the holes in the first mask element has a first receiving portion and a first channel portion, the first receiving portion being larger than a respective pair of clamped pins and shaped to receive the respective pair of clamped pins, the first channel portion shaped closely to receive a first end part of the respective pair of clamped pins in an abutted configuration. Each of the holes in the second mask element has a second receiving portion and a second channel portion, the second receiving portion being larger than a respective pair of clamped pins and shaped to receive the respective pair of clamped pins, the second channel portion shaped closely to receive a second end part of the respective pair of clamped pins in an abutted configuration. When the first mask element and the second mask element are in a first configuration the first receiving portion and the second receiving portion are substantially aligned, and when the first mask element is rotated with respect to the second mask element into a second configuration, the first and second channel portions are substantially aligned so that the first and second channel portions substantially closely surround the respective pair of clamped pins to inhibit an electron beam from passing the mask arrangement.

This mask arrangement provides effective shielding against electron beam scatter during the welding process, reducing the likelihood of straying electrons making contact with other motor stator components. The rotatable configuration allows for easy loading and unloading of the stator pins while providing precise masking when in the closed position.

The first and second mask elements may be substantially annular.

The annular shape of the mask elements allows for efficient coverage of the circular arrangement of pins in a typical motor stator, ensuring uniform protection across all welding points.

Each of the first and second mask elements may include a tab arrangement configured to engage with an actuator such that they may be rotated by way of the actuator.

The tab arrangement enables automated operation of the mask elements, increasing convenience in the welding process.

The first and second channel portions of the first and second mask elements may have a width substantially equal to a width of the respective pair of clamped pins in an abutted configuration.

This precise sizing of the channel portions ensures a tight fit around the clamped pins, minimizing gaps through which stray electrons could pass.

The first and second channel portions of the first and second mask elements may have a height of greater than 50% of a height of the respective pair of clamped pins in an abutted configuration, such that in the second configuration the first and second channel portions at least meet.

By ensuring the channel portions meet or overlap, this feature provides comprehensive coverage around the pins, further enhancing the masking effect and reducing the likelihood of penetration of electrons past the mask.

The first and second channel portions of the first and second mask elements may have a height of greater than 55% and when the mask arrangement is in the second configuration, the first and second channel portions at least partially overlap.

The partial overlap of channel portions creates an even more robust barrier against stray electrons, further reducing the likelihood of unwanted overspray of the electron beam to surrounding areas.

The first and second concentric patterns of holes may each include at least two rows of holes.

Multiple rows of holes allow the mask arrangement to accommodate stator designs with varying pin configurations, increasing its versatility.

Each row of the first and second concentric patterns of holes may include at least ten holes, and preferably at least twenty holes, and further preferably at least thirty holes.

A higher number of holes per row enables the mask arrangement to be used with motor stators of various sizes and pin densities, enhancing its applicability across different motor designs.

The second concentric pattern of holes of the second mask element may be a mirror image of the first concentric pattern of holes of the first mask element.

This mirror image configuration ensures perfect alignment of the mask elements when used as a pair and when rotated into the closed position, providing uniform protection across all pin pairs.

The mask arrangement may be configured to be used in combination with a clamping arrangement configured to clamp together respective pairs of pins of the motor stator, such that they abut one another.

By working in conjunction with a clamping arrangement, the mask system ensures that the pins are properly positioned for both effective masking and precise welding.

The first and second mask elements may be manufactured using laser cutting or electrical discharge machining.

These manufacturing methods allow for high precision in creating the complex hole patterns and channel shapes, along with the sharp edges required for effective masking.

The first and second mask elements may be formed of hardened steel.

Hardened steel provides durability and resistance to the high temperatures and potential effects associated with the electron beam welding process.

The first and second mask elements may have a titanium or ceramic coating.

A titanium or ceramic coating enhances the mask elements' resistance to heat and electron beam effects, prolonging their operational life and maintaining their effectiveness over multiple welding cycles.

In a second aspect, a method of electron beam welding a motor stator is provided. The method comprises: clamping together pairs of pins of a motor stator; placing a mask arrangement as described in the first aspect; causing rotation of the first mask element with respect to the second mask element; and electron beam welding together respective clamped pairs of pins of the motor stator.

This method integrates the mask arrangement into a comprehensive welding process, ensuring proper protection of the stator components throughout the welding operation.

In a third aspect, a kit of parts for electron beam welding a motor stator is provided. The kit of parts comprises: a clamping arrangement configured to clamp pairs of pins of a motor stator; a mask arrangement as described in the first aspect arranged between the clamping arrangement and free ends of the pins of the motor stator; an actuator configured to cause rotation of the first mask element with respect to the second mask element; and an electron beam welding arrangement configured to weld together respective clamped pairs of pins of the motor stator.

This kit of parts provides a complete system for implementing the masked electron beam welding process, ensuring necessary components are available and configured to work together effectively.

Embodiments of the invention will be described, by way of example, with reference to the following drawings, in which:
FIG. 1 illustrates a known arrangement for clamping and welding pin pairs of a motor stator;
FIG. 2A illustrates a cross-sectional end view of a pin of a motor stator;
FIG. 2B illustrates an exemplary masked pin pair of a motor stator in accordance with embodiments and techniques described herein;
FIG. 3A illustrates a mask arrangement for electron beam welding of motor stators in accordance with embodiments and techniques described herein;
FIG. 3B illustrates a mask arrangement around a pair of motor stator pins for electron beam welding in accordance with embodiments and techniques described herein;
FIG. 4A illustrates a portion of a mask arrangement with a pair of motor stator pins for electron beam welding in accordance with embodiments and techniques described herein;
FIG. 4B illustrates another portion of a mask arrangement with a pair of motor stator pins for electron beam welding in accordance with embodiments and techniques described herein;
FIG. 5 illustrates a mask arrangement with a pair of motor stator pins for electron beam welding in accordance with embodiments and techniques described herein;
FIG. 6 illustrates an additional view of a mask arrangement with a pair of motor stator pins for electron beam welding in accordance with embodiments and techniques described herein;
FIG. 7 illustrates a view of a hole in a mask arrangement in accordance with embodiments and techniques described herein;
FIGS. 8A and 8B illustrate spacing of holes and stator pin pairs for electron beam welding in accordance with embodiments and techniques described herein;
FIG. 9 illustrates a mask arrangement and a motor stator in accordance with embodiments and techniques described herein;
FIG. 10 illustrates a mask arrangement in accordance with embodiments and techniques described herein; and
FIG. 11A illustrates a mask arrangement and a clamp arrangement in accordance with embodiments and techniques described herein; and
FIG. 11B illustrates a mask arrangement, a clamp arrangement, and a motor stator in accordance with embodiments and techniques described herein

Common reference numerals are used throughout the figures to indicate similar features.

The present disclosure relates to a mask arrangement for electron beam welding of motor stators.

In known electron beam welding arrangements for motor stators, motor stator pin pairs, e.g. pairs of ends of hairpins of a motor stator, are clamped together and welded. Even in medium vacuum conditions, such as at pressures greater than 0.3 mbar, overspray of the electron beam when electron beam welding clamped pin pairs may occur. Such overspray or electron scatter may cause electron beam contact with portions of the motor stator or the pin pairs which is not required.

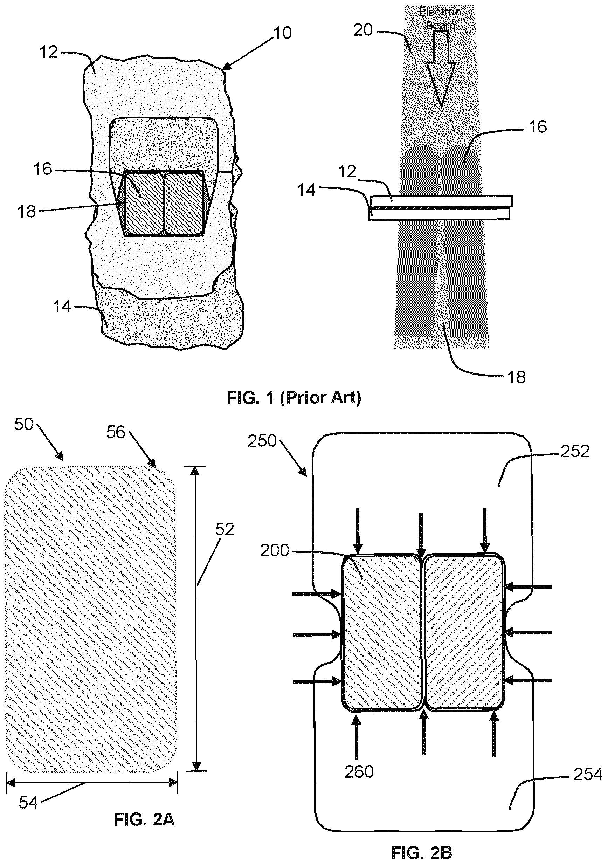

FIG. 1 shows a known arrangement for electron beam welding of pin pairs including a clamping arrangement 10 formed of a pair of clamping plates 12, 14. A pin pair 16 is shown in FIG. 1 in a clamped configuration. A gap 18 is shown around the pin pair 16 between the clamping arrangement 10 and the pin pair 16 through which an electron beam may pass.

In FIG. 1, a side view of the arrangement is also shown, in which the two clamping plates 12, 14 are positioned clamping the pin pair 16. An electron beam 20 is shown which is directed toward the pin pair 16. The electron beam may pass through the gap 18 and may make contact with portions of the motor stator or other parts of the pin pair 16. The two diagrams of FIG. 1 show complementary views of how the clamping arrangement 10 and the pin pair 16 interact during the electron beam welding process.

FIG. 2A shows a cross-sectional end view of a pin 50 of a motor stator. The pin 50 has a major axis 52 and a minor axis 54, and radius edges 56. The major axis 52, the minor axis 54, and the radius edges 56 may, alone or in combination, define the shape of the mask arrangements described herein.

FIG. 2B shows a masked pin pair of a motor stator. The pin pair 200 includes two pins 200 and the pins 200 are clamped together along the major axis 52 of the pins 200.

FIG. 2B also shows a portion of a mask arrangement 250 as described herein, formed of a first mask element 252 and a second mask element 254. The mask arrangement 250 is shown in FIG. 2B in a closed position, that is to say that the first mask element 252 and the second mask element 254 are such that the edges of the mask arrangement 250 closely surround the pin pair 200 which may inhibit an electron beam from passing the mask arrangement. This close surrounding of the pin pair 200 by the mask arrangement 250 is denoted by the arrows 260 shown in FIG. 2B.

More generally, the mask arrangement as described herein includes first and second mask elements 252, 254, each having concentric patterns of holes. These holes are designed to accommodate clamped pins of a motor stator. The first and second mask elements are configured to be rotatably moveable relative to each other, allowing for adjustment of the mask arrangement during the welding process.

In some examples, the mask arrangement forms part of a larger assembly that includes existing clamping layers 12, 14 as described herein as part of a clamping arrangement 10. The mask elements 252, 254 may be additional to these clamp layers 12, 14, creating a multi-layer assembly. This configuration allows for effective clamping of the motor stator pins while providing the masking function to control electron beam exposure during welding.

The mask arrangement 250 as described herein may offer several advantages for electron beam welding of motor stators. By providing adjustable coverage around the clamped pins, the mask arrangement may help control the exposure of the stator components to the electron beam. This can potentially lead to high weld quality and reduced effects on surrounding areas of the stator.

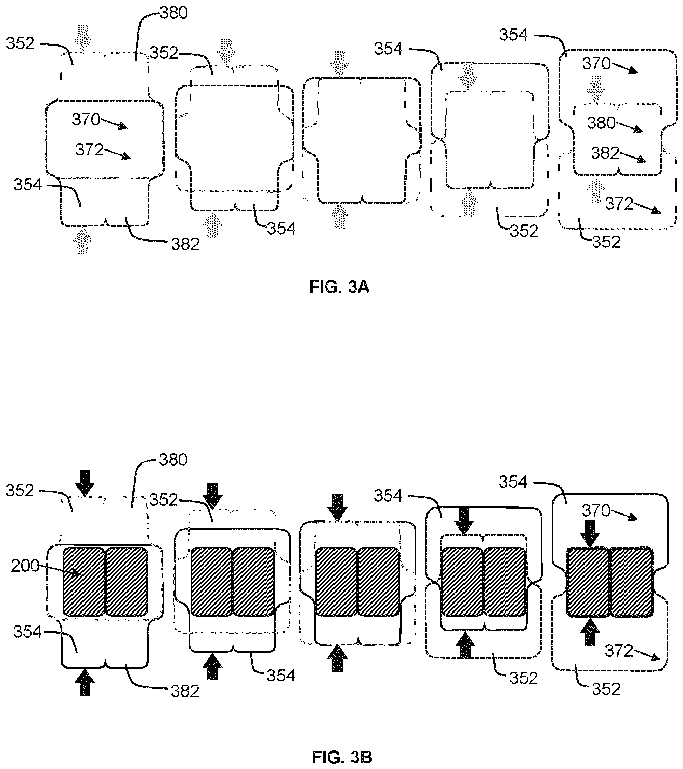

Referring now to FIG. 3A, first and second holes 352 and 354 of first and second mask elements 252, 254 are shown in varying states of overlap. As shown in FIG. 3A, first and second holes 352, 354 each have a receiving portion 370 and a channel portion 380, with the first mask element 252 including a first receiving portion 370 and a first channel portion 380 and the second mask element 254 including a second receiving portion 372 and a second channel portion 382.

In the first configuration, shown in the leftmost representation of FIG. 3A, the first and second mask elements 252, 254 are shown in a first configuration in which the first receiving portion 370 and the second receiving portion 372 are substantially aligned such that the larger portion of the first and second holes 352, 354 are aligned. In the rightmost representation of FIG. 3A, the first and second mask elements 252, 254 are shown in a second configuration in which the first channel portion 380 and the second channel portion 382 are substantially aligned, such that the smaller portion of the first and second holes 352, 353 are aligned. Generally, FIG. 3A shows a transition between the first configuration and the second configuration.

The holes in the first and second mask elements 252, 254 feature sharp internal corners within the profiled perforations. These corners may have a minimum size radii to provide a close fit around the clamped pins 200 and may therefore enhance the masking effect.

Referring now to FIG. 3B, in a similar way to FIG. 3A, first and second holes 352 and 354 of first and second mask elements 252, 254 are shown in varying states of overlap. A pair of clamped pins 200 is also shown in FIG. 3B, with the mask elements 252, 254 moving with respect to the clamped pins 200. Similar to that shown in FIG. 3A, first and second holes 352, 354 each have a receiving portion 370 and a channel portion 380, with the first mask element 252 including a first receiving portion 370 and a first channel portion 380 and the second mask element 254 including a second receiving portion 372 and a second channel portion 382.

In the first configuration, shown in the leftmost representation of FIG. 3B, the first and second mask elements 252, 254 are shown in a first configuration in which the first receiving portion 370 and the second receiving portion 372 are substantially aligned such that the larger portion of the first and second holes 352, 354 are aligned. This may ease the application of the mask elements 252, 254 over the pair of clamped pins 200. In the rightmost representation of FIG. 3B, the first and second mask elements 252, 254 are shown in a second configuration in which the first channel portion 380 and the second channel portion 382 are substantially aligned, such that the smaller portion of the first and second holes 352, 353 are aligned and closely surround the pair of clamped pins 200 to inhibit an electron beam from passing the mask arrangement. Generally, like FIG. 3A, FIG. 3B shows a transition between the first configuration and the second configuration.

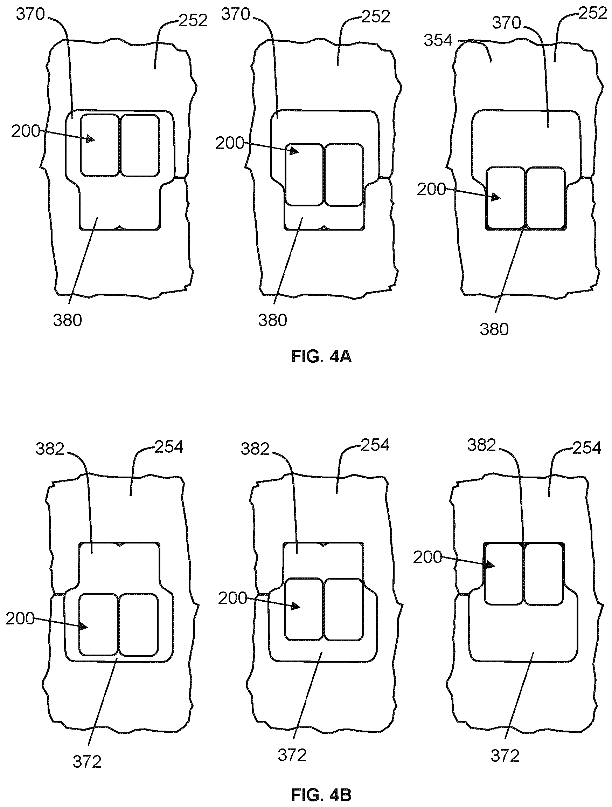

FIGS. 4A and 4B show the first mask element 252 and the second mask element 254 respectively in different positions with respect to a pair of clamped pins 200. Broadly, the leftmost representation of each of FIG. 4A and 4B shows the pair of clamped pins in the first and second receiving portion 370, 372 of the first and second mask elements 252, 254 as part of the first position, and the rightmost representation of each of FIG. 4A and 4B shows the pair of clamped pins in the first and second channel portion 380, 382 of the first and second mask elements 252, 254 as part of the second position, such that the respective mask element serves to inhibit an electron beam from passing the mask arrangement. The centremost representation of FIG. 4A and 4B shows the respective first and second mask elements 252, 254 moving between the first and second configurations.

Generally, the first mask element 252 and the second mask element 254 each take a substantially annular structure with a concentric pattern of holes. As described herein, each hole in the first and second mask elements 252, 254 includes a first and second receiving portion 370, 372 and a first and second channel portion 380, 382 respectively. As described herein, the first and second receiving portions 370, 372 have a relatively larger size and shape configured to accommodate a pair of clamped pins 200 of a motor stator. The first and second channel portions 380, 382 have a relatively smaller size and shape designed to closely receive a first end part of the pair of clamped pins 200 in an abutted configuration. The end part of the pair of clamped pins 200 may be taken as the free end of the pins, i.e. they are the ends of the pins which protrude outwards from the motor stator.

The second concentric pattern of holes in the second mask element 254 may be a mirror image of the first concentric pattern of holes in the first mask element 252. This mirror image configuration allows for alignment of the first and second receiving portions 370, 372 in the first configuration and alignment of the first and second channel portions 380, 382 in the second configuration, when the first and second mask elements 252, 254 are counter-rotated to give precise alignment of the first and second mask elements 252, 254.

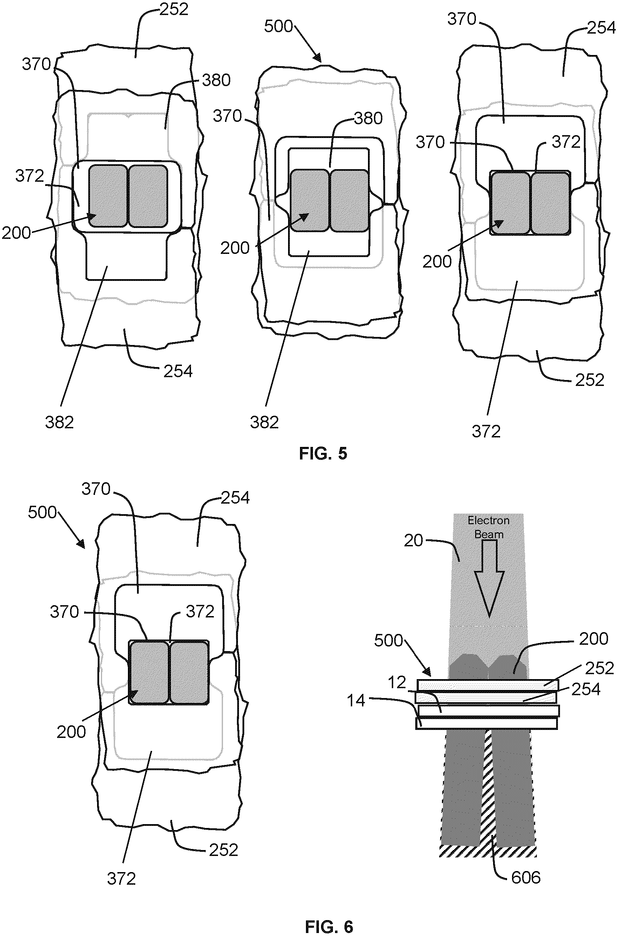

FIG. 5 shows the mask arrangement 500 moved between the first configuration and the second configuration. In the first configuration, shown in the leftmost representation of FIG. 5, the first and second receiving portions 370, 372 are aligned such that the pin pair 200 may be received by the mask arrangement 500. In the second configuration, shown in the rightmost representation of FIG. 5, the first and second channel portions 380, 382 are aligned such that the pin pair 200 is masked by the mask arrangement 500. The centremost representation shows the mask arrangement partway between the first and second configurations.

When the first mask element 252 and the second mask element 254 are in a first configuration, the first receiving portion 370 and the second receiving portion 372 are substantially aligned. This alignment allows for easy insertion of the clamped pins 200 into the mask arrangement, e.g., by providing clearance.

When the first mask element 252 is rotated with respect to the second mask element 254 into a second configuration, the first and second channel portions 380, 382 are substantially aligned. In this second configuration, the first and second channel portions 380, 382 substantially closely surround the respective pair of clamped pins 200. This close surrounding arrangement inhibits an electron beam from passing the mask arrangement, providing effective shielding during the welding process.

FIG. 6 shows the mask arrangement of FIG. 5 in the second configuration. The pin pair 200 of FIG. 6 is shown in a clamped configuration. FIG. 6 shows how the mask arrangement 500 closely surrounds the pin pair 200 to inhibit an electron beam from passing the mask arrangement.

In FIG. 6, a side view of the arrangement is also shown, in which two clamping plates 12, 14 are positioned clamping the pin pair 200. The mask arrangement 500 formed of the first mask element 252 and the second mask element 254 is also shown, with the mask arrangement shown between the clamping plates 12, 14 and the ends of the pin pair 200. An electron beam 20 is shown which is directed toward the pin pair 200. The electron beam may not penetrate the mask arrangement 500 and thus may not make contact with portions of the motor stator or other parts of the pin pair 200. This is illustrated by the shadow area 606 shown underneath the mask arrangement 500 of FIG. 6. The two diagrams of FIG. 6 show complementary views of how the mask arrangement 500 and the pin pair 200 interact during the electron beam welding process.

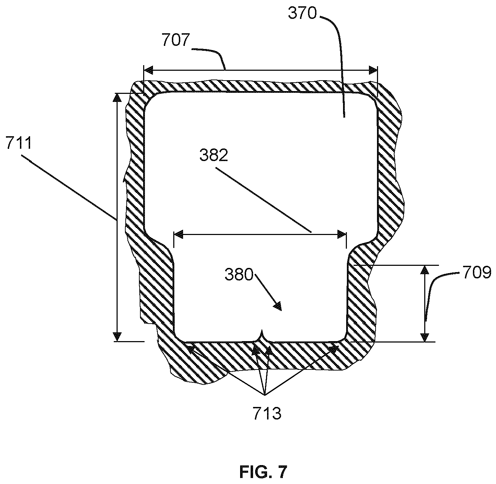

FIG. 7 shows a hole in a mask element 252, 254 as described herein. This hole may be one of the concentric patterns of holes as described herein. The receiving portion 370, 372 and the channel portion 380, 382 can be seen in FIG. 7. The width of the channel portion in the first mask element is substantially equal to the width of two hairpins clamped together side by side, denoted by channel width dimension 707. This width corresponds to approximately 200% of the minor axis of a single hairpin as described herein. The design of the channel portion 380, 382 may allow for minimal gaps between the mask and the pin-pair periphery, with clearances of less than 0.2mm.

The height of the channel portion 380, 382 in the mask element exceeds 50% of the height of the clamped pin pair 200, denoted by channel height dimension 709. This dimensional relationship enables effective coverage and shielding of the pins during the electron beam welding process.

The overall height 711 of the hole may be defined based upon a factor of the spacing of the pins of the motor stator, described later herein. The overall width 713 of the hole may be based on the width of a pin pair 200, to provide clearance for assembly over two pins un-clamped. The radii 713 of the corners of the hole may be set to match the edges of the pin as described herein and with particular reference to FIG. 2A.

The width of the second channel portion in the second mask element is substantially equal to the width of two hairpins clamped together side by side, matching the dimensions of the first channel portion in the first mask element. The height of the second channel portion in the second mask element also exceeds 50% of the height of the clamped pins, ensuring effective coverage and shielding.

For the mask arrangement to function properly, a minimum pitch spacing between adjacent pairs of clamped pins is required. This minimum pitch spacing is greater than 225% of the major axis of a hairpin. This spacing requirement ensures sufficient clearance for the mask elements to rotate between the first and second configurations without interference.

The first and second mask elements 252, 254 may be manufactured using various techniques, such as laser cutting or electrical discharge machining. These manufacturing methods allow for the creation of precise hole patterns and sharp internal corners. The first and second mask elements 252, 254 may be formed from hardened steel to withstand the conditions of the electron beam welding process. In some examples, the first mask element and the second mask element 252, 254 may have a titanium or ceramic coating applied to the surface thereof to enhance durability and reduce electron scatter. In some cases, the coating applied to the first and second mask elements 252, 254 may be non-reflective.

The combination of hardened steel construction, specialized coatings, precision manufacturing techniques, and surface treatments contributes to the overall effectiveness and longevity of the mask arrangement. These material and manufacturing choices help to ensure that the mask elements can withstand the demanding conditions of electron beam welding while maintaining their critical dimensions and performance characteristics.

The mask arrangement 500 generally includes first and second mask elements 252, 254 that are configured to be rotatably moveable relative to each other. This rotatable configuration allows the mask arrangement 500 to transition between an open position and a closed position, facilitating the loading and unloading of stator pins 200.

The rotational movement between the open and closed positions may be achieved through a radial motion of contra-rotating layers. This contra-rotating motion allows for a smooth transition between positions while maintaining proper alignment of the mask elements 252, 254.

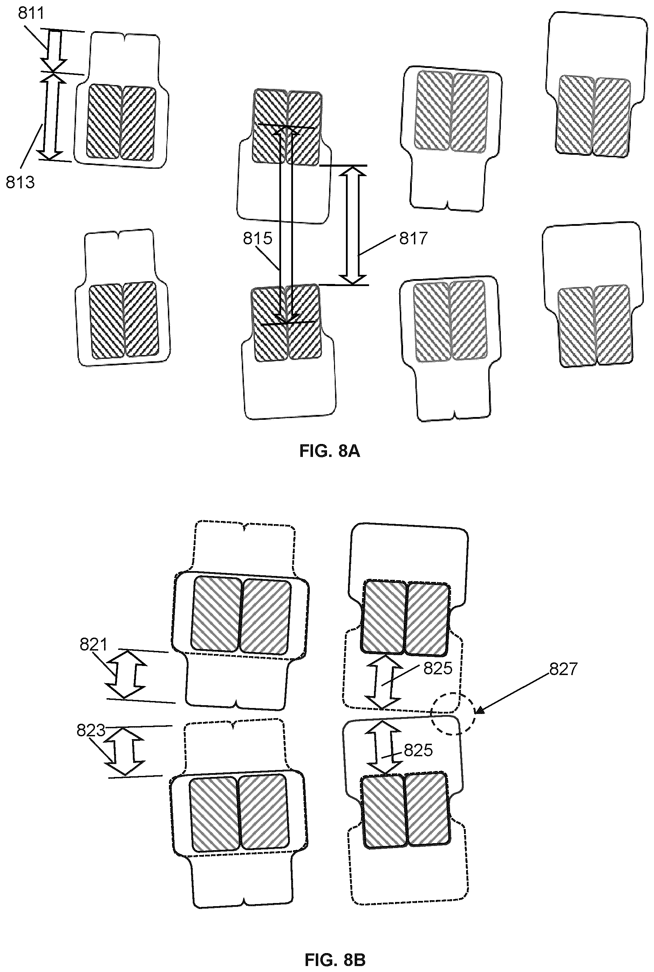

The pin-to-pin spacing of a motor stator may dictate the spacing of the holes in the first and second mask elements 252, 254. The inside row of pins of a motor stator has a narrower pin-to-pin distance than the outside row of pins of a motor stator, and in general has the narrowest pin-to-pin distance of the motor stator. The first and second mask elements 252, 254 require space within this pin-to-pin distance to provide shielding and for rotation to close. These shield and rotation relationships are shown in FIG. 8A. Due to the inclined curvature, described above, it may be assumed in some cases that that the minimum pin-to-pin distance is at least 100% of the major axis less than the pitch spacing.

In an example, the minimum hole spacing may be formulated as a factor of the pitch spacing. For example, a minimum pin-to-pin distance for the innermost row may be taken as 60% of the major axis of a hairpin, plus 60% of the major axis of a hairpin, plus at least 5% perforation clearance, which gives at least 125% of the major axis. Therefore, the minimum pitch spacing for the innermost row may be taken as at least 100% of the major axis plus the 125% of the major axis calculated previously, giving an optimal spacing of at least 225% of the major axis.

Therefore, the optimum factor of pitch spacing may be derived from the minimum pin-to-pin distance (e.g. 125% of the major axis). A larger pitch spacing (e.g. at least 225% of the major axis) may allow for larger holes in the mask, giving greater loading clearance with more rotation to close giving greater shield overlap.

FIGS. 8A and 8B show spacing of holes and stator pin pairs. Throughout FIGS. 8A and 8B, a hole in a mask element 252, 254 is shown. The height of the channel portion 811 is shown in FIG. 8A, and may be 55% of the major axis of the pin pair 200. In general, the height of the channel portion 811 may be at least 50% of the major axis of the pin pair 200 such that when the mask elements 252, 254 are in the second position, the mask elements 252, 254 overlap to shield from electron beam overspill.

The height of the receiving portion 813 is also shown in FIG. 8A and may be 110% of the major axis of the pin pair 200 to allow for loading clearance.

FIG. 8A also shows a pitch spacing 815 and a minimum pin-to-pin distance 817 as described herein. Generally, the pin-to-pin spacing shown in FIG. 8A corresponds to that described above.

FIG. 8B shows the rotation of the mask elements 252, 254 and shows the first mask layer rotation to close 821 and second mask layer rotation to close 823. FIG. 8B also shows the 60% of the major axis of the pin pair 200 described above as major axis dimension 825. In FIG. 8B, the close approach of the holes in the first and second mask elements 252, 254 is shown as region 827. If the receiving portions 370, 372 of the holes of the first and second mask elements 252, 254 were oversized, the receiving portions 370, 372 of the holes of the first and second mask elements may overlap and introduce a further aperture in the mask arrangement 500. This further aperture may reduce the efficacy of the mask arrangement 500.

To facilitate the rotational movement, each of the first and second mask elements 252, 254 may include a tab arrangement. These tab arrangements are configured to engage with an actuator, enabling controlled rotation of the mask elements 252, 254. The actuator may be part of an automated system designed to manipulate the mask arrangement 500.

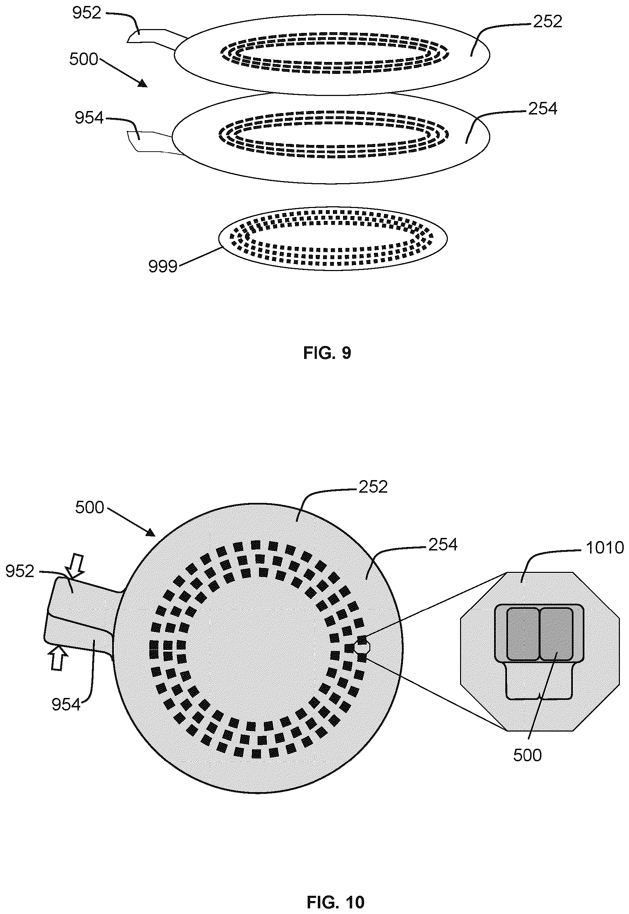

FIG. 9 shows the first and second mask elements 252, 254 with tab elements 952, 954. The tab elements 952, 954 may be used to effect rotation of the mask elements 252, 254 with respect to the motor stator 999.

FIG. 10 shows the first and second mask elements 252, 254 including tab elements 952, 954 configured for contra-rotation. The first and second mask elements 252, 254 are shown in the first configuration in FIG. 10. A pin pair 200 is shown in the inset portion 1010, with the pin pair 200 unmasked.

In FIG. 9 and FIG. 10, and in some examples, the concentric patterns of holes in each mask element 252, 254 include at least two rows of holes. This multi-row configuration allows for coverage of multiple radial positions of stator pins, accommodating various stator designs and sizes.

Each row in the concentric patterns may include a significant number of holes to provide comprehensive coverage around the circumference of the stator. In some examples, each row includes at least ten holes. In other examples, each row may include at least twenty holes. In further examples, each row may include at least thirty holes. The specific number of holes per row may be determined based on factors such as the size of the stator, the number of pins, and the desired spacing between pins.

The rotatable configuration of the mask arrangement 500 offers several advantages. In the open position, it allows for easy loading and unloading of the stator pins, reducing the time required for setup and changeover. In the closed position, it provides effective shielding around the clamped pairs of pins, helping to control the exposure of the stator components to the electron beam during welding.

The ability to transition between open and closed positions through a simple rotational movement also contributes to the efficiency of the welding process. This design allows for quick adjustments between welding operations, potentially increasing overall production speed and flexibility.

The first and second mask elements 252, 254 may be substantially annular in shape, with each mask element 252, 254 featuring concentric patterns of holes. These concentric patterns are designed to accommodate the arrangement of pins in a motor stator.

Generally, the dimensions of the receiving portions 370, 372 may be determined based on the size of the clamped pin pairs 200 and the desired clearance for insertion. For example, the receiving portions 370, 372 may have a width that is greater than the width of two clamped pins 200, providing sufficient space for easy placement.

Generally, the channel portions 380, 382 may have more precise dimensions, designed to closely fit around the clamped pin pairs 200. The width of the channel portions 380, 382 may be substantially equal to the width of two pins clamped together side by side. This close fit may help to minimize gaps between the mask arrangement 500 and the pin pairs 200, enhancing the masking effect during the electron beam welding process.

The height of the channel portions 380, 382 may be designed to provide adequate coverage of the pin pairs 200. In some examples, the height of the channel portions 380, 382 may be greater than 50% of the height of the clamped pin pairs 200. This dimensional relationship ensures that a significant portion of the pin pairs 200 is shielded by the mask arrangement when in the closed (e.g. second) configuration.

The specific dimensions of the holes may vary depending on the particular stator design and pin configurations. For example, in a stator with larger pins, the hole dimensions may be proportionally increased to maintain the desired fit and coverage. Conversely, for stators with smaller pins, the hole dimensions may be reduced accordingly.

In some examples, the mask arrangement 500 may be integrated into a larger assembly that includes clamping layers. This integrated assembly may be placed on the stator as a single unit in an automated station. The use of an automated station for placement and actuation of the mask arrangement 500 can help ensure precise positioning and consistent operation.

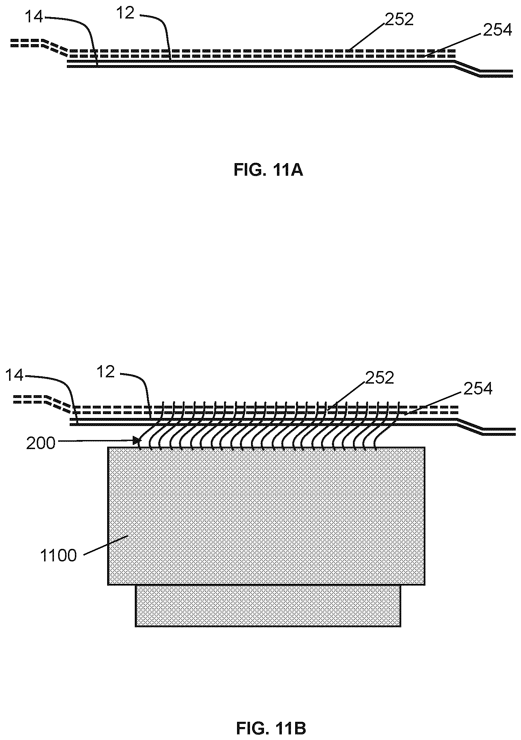

FIG. 11A shows an arrangement which includes clamping plates 12, 14 and first and second mask elements 252, 254. The mask elements 252, 254 are positioned above the clamping plates 12, 14, and may be placed on the motor stator after the clamping plates 12, 14.

FIG. 11B shows a motor stator 1100 including pin pairs 200, a pair of clamping plates 12, 14 in position, and a mask arrangement 500 comprising a first mask layer 252 and a second mask layer 254 as described herein. The mask arrangement may be placed between the clamping plates 12, 14 and the free ends of the pin pairs 200.

The arrangement and dimensions of the holes in the mask elements 252, 254 allow for flexibility in accommodating various stator designs while providing effective masking during the electron beam welding process. The combination of multiple rows, numerous holes per row, and precisely dimensioned receiving portions 370, 372 and channel portions 380, 382 may contribute to the versatility and effectiveness of the mask arrangement 500.

In general, the mask arrangement 500 described herein may allow for optimal electron beam welding in medium vacuum conditions (such as at pressures greater than 0.3 mbar) which may allow for reduced vacuum pumping time and reduced cycle time when compared to welding in high vacuum pressure conditions.

As described herein, the mask arrangement 500 may be deployed in conjunction with a clamping arrangement to facilitate electron beam welding of motor stator pins. The process may begin with clamping together pairs of pins 200 of a motor stator using a clamping arrangement. This clamping step ensures that the pins are properly positioned and held securely for the welding process.

After the pins are clamped, a mask arrangement 500 is placed over the clamped pins 200 . The mask arrangement 500 includes first and second mask elements 252, 254, each with patterns of holes designed to accommodate the clamped pin pairs 200. Initially, the mask elements 252, 254 are positioned in an open configuration, allowing for easy placement over the clamped pins.

Once the mask arrangement 500 is in place, the first mask element 252 may be rotated relative to the second mask element 254 or vice versa. This rotation transitions the mask arrangement from the first, open configuration to the second, closed configuration. In the closed configuration, the channel portions 380, 382 of the holes in the first and second mask elements 252, 254 align closely around the clamped pin pairs 200, creating a tight seal that effectively shields the surrounding stator components.

With the mask arrangement 500 in the second, closed configuration, an electron beam welding arrangement may be used to weld together the respective clamped pairs of pins 200 of the motor stator. The mask arrangement 500 helps to control the exposure of the stator components to the electron beam, focusing the welding energy on the intended weld areas.

The combination of the clamping arrangement, mask arrangement 500, and electron beam welding arrangement forms a kit of parts for electron beam welding a motor stator. This kit allows for efficient and precise welding of stator pins.

The ability of the mask arrangement 500 to transition between open and closed configurations provides flexibility in the manufacturing process. The first, open configuration allows for easy loading and unloading of stator assemblies, while the second, closed configuration ensures effective shielding during the welding process. This design can potentially lead to an increase production efficiency by reducing setup time and enhancing the overall quality of the welded connections.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A mask arrangement for electron beam welding of a motor stator, the mask arrangement comprising:
a first mask element and a second mask element each comprising respective first and second concentric patterns of holes each shaped to accommodate a respective pair of clamped pins of a motor stator, the first and second mask elements configured to be rotatably moveable relative to each other, wherein:
each of the holes in the first mask element has a first receiving portion and a first channel portion, the first receiving portion being larger than a respective pair of clamped pins and shaped to receive the respective pair of clamped pins, the first channel portion shaped closely to receive a first end part of the respective pair of clamped pins in an abutted configuration; and
each of the holes in the second mask element has a second receiving portion and a second channel portion, the second receiving portion being larger than a respective pair of clamped pins and shaped to receive the respective pair of clamped pins, the second channel portion shaped closely to receive a second end part of the respective pair of clamped pins in an abutted configuration, such that:
when the first mask element and the second mask element are in a first configuration the first receiving portion and the second receiving portion are substantially aligned, and when the first mask element is rotated with respect to the second mask element into a second configuration, the first and second channel portions are substantially aligned so that the first and second channel portions substantially closely surround the respective pair of clamped pins to inhibit an electron beam from passing the mask arrangement.

2. The mask arrangement of claim 1, wherein the first and second mask elements are substantially annular.

3. The mask arrangement of claim 1 or claim 2, wherein each of the first and second mask elements include a tab arrangement configured to engage with an actuator such that they may be rotated by way of the actuator.

4. The mask arrangement of any preceding claim, wherein the first and second channel portions of the first and second mask elements have a width substantially equal to a width of the respective pair of clamped pins in an abutted configuration.

5. The mask arrangement of any preceding claim, wherein the first and second channel portions of the first and second mask elements have a height of greater than 50% of a height of the respective pair of clamped pins in an abutted configuration, such that in the second configuration the first and second channel portions at least meet.

6. The mask arrangement of any one of claims 1 to 4, wherein the first and second channel portions of the first and second mask elements have a height of greater than 55% and when the mask arrangement is in the second configuration, the first and second channel portions at least partially overlap.

7. The mask arrangement of any preceding claim, wherein the first and second concentric patterns of holes each include at least two rows of holes.

8. The mask arrangement of any preceding claim, wherein each row of the first and second concentric patterns of holes includes at least ten holes, and preferably at least twenty holes, and further preferably at least thirty holes.

9. The mask arrangement of any preceding claim, wherein the second concentric pattern of holes of the second mask element is a mirror image of the first concentric pattern of holes of the first mask element.

10. The mask arrangement of any preceding claim, wherein the mask arrangement is configured to be used in combination with a clamping arrangement configured to clamp together respective pairs of pins of the motor stator, such that they abut one another.

11. The mask arrangement of any preceding claim, wherein the first and second mask elements are manufactured using laser cutting or electrical discharge machining.

12. The mask arrangement of any preceding claim, wherein the first and second mask elements are formed of hardened steel.

13. The mask arrangement of claim 12, wherein the first and second mask elements have a titanium or ceramic coating.

14. A method of electron beam welding a motor stator, the method comprising:
clamping together pairs of pins of a motor stator;
placing a mask arrangement as claimed in any one of claims 1 to 13;
causing rotation of the first mask element with respect to the second mask element; and
electron beam welding together respective clamped pairs of pins of the motor stator.

15. A kit of parts for electron beam welding a motor stator, the kit of parts comprising:
a clamping arrangement configured to clamp pairs of pins of a motor stator;
a mask arrangement as claimed in any one of claims 1 to 13 arranged between the clamping arrangement and free ends of the pins of the motor stator;
an actuator configured to cause rotation of the first mask element with respect to the second mask element; and
an electron beam welding arrangement configured to weld together respective clamped pairs of pins of the motor stator.
